# EUROPÄISCHE PATENTSCHRIFT

(11) **EP 3 364 158 B1**
(45) Veröffentlichungstag und Bekanntmachung des Hinweises auf die Patenterteilung: **11.08.2021**
(21) Anmeldenummer: 18158888.0
(22) Anmeldetag: 15.12.2010
(51) Int. Cl.: G01D 11/24, G01D 11/30

(54) **SENSOR**
SENSOR
CAPTEUR

(30) Priorität: 21.12.2009 DE 102009060002
(43) Veröffentlichungstag der Anmeldung: 22.08.2018
(62) Teilanmeldung aus: 10810736.8
(73) Patentinhaber: MICRO-EPSILON Messtechnik GmbH & Co. KG, 94496 Ortenburg (DE)
(72) Erfinder: Hoenicka, Reinhold, 94496 Ortenburg (DE); Nagl, Josef, 94550 Künzing (DE); Schopf, Tobias, 84371 Triftern (DE); Baumann, Heinrich, 94034 Passau (DE); Seikowsky, Axel, 94496 Ortenburg (DE)
(74) Vertreter: Ullrich & Naumann PartG mbB

(56) Entgegenhaltungen:
- WO-A2-03/067657
- DE-A1- 10 314 875
- DE-A1- 19 620 548
- DE-A1-102008 016 829
- DE-C1- 4 234 289
- GB-A- 2 314 631
- US-A- 4 898 035
- US-A1- 2009 015 271

## Beschreibung

Die Erfindung betrifft einen Sensor mit einem kontaktlos arbeitenden Sensorelement und einem elektronische Bauteile sowie einen elektrischen Anschluss umfassenden Gehäuse.

Bei dem hier in Rede stehenden Sensor handelt es sich um einen kontaktlos arbeitenden Sensor, wobei das im Konkreten realisierte Prinzip eine nur untergeordnete Rolle spielt. Grundsätzlich kann es sich um jedweden kontaktlos arbeitenden Sensor handeln, beispielsweise um einen Drucksensor, einen optischen Sensor, einen Temperatursensor, einen kapazitiven oder induktiven Sensor, etc. Sensoren der hier in Rede stehenden Art werden in vielfältigsten Anwendungen eingesetzt, um physikalische Größen zu erfassen. Bei vielen Anwendungen ist der Sensor ganz erheblichen Umwelteinflüssen ausgesetzt, wie z.B. Schmutz, Staub, Wasser, Öl oder sonstigen Medien, die das Messergebnis verfälschen oder sogar den Sensor zerstören können. Auch Überdruck oder Unterdruck sowie Temperatur kann zu einer Beeinträchtigung oder gar Zerstörung des Sensors führen. Daher ist es bei solchen Anwendungen stets erforderlich, den Sensor gegen äußere Einflüsse zu schützen, indem das Gehäuse dicht, oft sogar hermetisch, verschlossen ist.

In besonderen Anwendungen kann es erforderlich sein, die Umgebung vor störenden Einflüssen aus dem Sensor zu schützen. Dies ist besonders im Hochvakuum oder in hochreinen Umgebungen der Fall. Die Umgebung könnte durch das Austreten von kontaminierenden Stoffen aus dem Sensor beeinträchtigt werden. So muss z.B. beim Einsatz im Ultrahochvakuum das Ausgasen von störenden Substanzen vermieden werden, da diese das Vakuum zerstören können. In hochreinen Umgebungen, in sog. Ultraclean-Umgebungen, darf der Sensor ebenfalls keine störenden Substanzen emittieren. Dies ist z.B. in der Halbleiterherstellung der Fall, wo die Umgebung im Fertigungsprozess extrem sauber sein muss. Partikel oder Gase könnten den Prozess stören, indem Masken, Substrate oder Optiken wie Spiegel und Linsen beeinträchtigt oder gar beschädigt werden. Daher ist es unter diesen Umgebungsbedingungen notwendig, dass keine störenden Substanzen aus dem Sensor nach außen dringen.

Zur Abdichtung des Sensorgehäuses sind aus der Praxis zahlreiche Möglichkeiten bekannt. So ist es möglich, mehrteilige Gehäuse zu verwenden, wobei deren Teile miteinander mechanisch verbunden sind, beispielsweise durch Verschraubung, Klemmung, Nieten, etc. Zur Abdichtung werden üblicherweise Dichtelemente aus Gummi oder Kunststoff verwendet. Auch sind aus der Praxis bereits Klebe- oder Vergussverfahren bekannt, die grundsätzlich in der Sensorik verwendet werden. Dabei verbindet ein Klebe- oder Vergussmittel die Gehäuseteile untereinander und/oder mit dem Sensorelement. Letztendlich wird durch das Vergussmaterial das Sensorelement im Inneren des Gehäuses fixiert.

Eine weitere Möglichkeit der Abdichtung ist das Löten oder Schweißen. Dabei werden üblicherweise identische oder ähnliche Werkstoffe, insbesondere Metalle, miteinander verbunden. Für sich gesehen sind auch bereits Metall-Keramik-Lötverbindungen bekannt.

Die zuvor aufgeführten, aus der Praxis bekannten Abdichtmaßnahmen haben den Nachteil, dass das Sensorelement innerhalb des Gehäuses als separates Bauteil ausgeführt ist, welches durch die Gehäuseteile mehr oder weniger umschlossen ist. Bei vielen Sensorarten wird durch das Gehäuse, auch in dünnster Ausführung der Gehäusewandung, das Messergebnis verfälscht. So erfolgt beispielsweise bei einem optischen Sensor die Messung durch ein Glasfenster, welches zur Abdichtung mit dem Gehäuse verklebt wird. Durch Absorption oder Brechung, insbesondere an den Klebestellen, besteht die Gefahr, dass das Messergebnis beeinflusst wird. Bei magnetischen Sensoren wird das Messsignal durch ferromagnetische Werkstoffe beeinflusst. Bei induktiven oder Wirbelstromsensoren bedämpft ein Metallgehäuse die elektromagnetischen Felder, was zu einem reduzierten Messsignal führt. Aus Gründen der erforderlichen Robustheit und mechanischen Stabilität des Sensors ist es insbesondere bei industriellen Anwendungen meist erforderlich, das Gehäuse aus Metall, regelmäßig aus einem preiswerten Stahl, zu fertigen. Damit das Gehäuse das Messsignal nicht zu sehr beeinträchtigt, wird der Sensor üblicherweise auf der Stirnseite mit einer Kappe aus Kunststoff, Keramik oder anderen nichtleitenden Materialien abgedeckt bzw. verschlossen. Die Verbindung der Kappe mit dem Metallgehäuse kann dabei durch Kleben, Klemmen oder unter Verwendung von Dichtringen, insbesondere bei Keramikkappen auch durch Löten, erzeugt werden.

Bei den bekannten Sensoren und den zu deren Herstellung angewandten Verfahren ist jedoch nachteilig, dass das eigentliche Sensorelement, beispielsweise die Kupferspulen eines induktiv arbeitenden Sensors oder die Kondensatorplatten eines kapazitiven Sensors, durch das Gehäuse vom Ort der Messung weiter entfernt bzw. abgetrennt sind. Dies führt zu einer Reduktion der Empfindlichkeit des Sensors, nämlich aufgrund des Einflusses des Gehäuses.

Insbesondere bei Abstandssensoren vergrößert sich der Messabstand des Sensorelements zum Messobjekt aufgrund des Gehäuses bzw. der Materialdicke des Gehäuses, da nämlich die Wanddicke und ggf. vorhandene Abstände aufgrund der konkreten Gehäuseausführung oder aufgrund notwendiger Luft- oder Klebespalte den eigentlichen Messabstand vergrößern. Außerdem verursacht die Notwendigkeit einer geeigneten Kapselung bzw. Abdeckung mittels Gehäusekappe zusätzliche Kosten, nämlich einerseits Materialkosten und andererseits Kosten in der Montage.

Aus der Praxis sind auch bereits Sensoren mit Kunststoffgehäuse bekannt, die gegenüber dem Metallgehäuse günstiger herstellbar sind. Kunststoffgehäuse haben jedoch den Nachteil, dass sie Feuchtigkeit/Wasser aus der Umgebung aufnehmen, insbesondere auch Feuchtigkeit aus der Luft. Dadurch werden kapazitive Sensoren und Wirbelstromsensoren in ihrer Funktion beeinträchtigt, da nämlich das aufgenommene Wasser die Kapazität der Sensoranordnung verändert und regelmäßig einen Drift des Messsignals verursacht.

Unterschiedliche Ausgestaltungen von Sensoren sind in den Dokumenten DE 10 2008 016 829 A1, US 4 898 035 A, DE 103 14 875 A1, DE 42 34 289 C1, US 2009/0015271 A1, GB 2 314 631 A, WO 03/067657 A2 und DE 196 20 548 A1 beschrieben.

Im Lichte der voranstehenden Ausführungen liegt der Erfindung die Aufgabe zugrunde, einen Sensor mit einem kontaktlos arbeitenden Sensorelement anzugeben, dessen Gehäuse hinreichend gut gekapselt ist, ohne dabei das Sensorelement in nachteiliger Weise abzuschirmen. Außerdem soll der Sensor kostengünstig zu fertigen sein.

Die voranstehende Aufgabe ist durch die Merkmale des Patentanspruchs 1 gelöst. Damit ist ein Sensor mit einem kontaktlos arbeitenden Sensorelement und einem elektronische Bauteile sowie einen elektrischen/elektronischen Anschluss umfassenden Gehäuse angegeben, wobei das Sensorelement Teil des Gehäuses ist und dieses zur Messseite hin abschließt und abdichtet, wobei das Gehäuse in einem Druckraum oder Vakuumbereich anordenbar ist und wobei das Sensorelement in einem Keramik-Substrat eingebettete Leiterbahnen umfasst, die innerhalb des Keramik-Substrats aus dem Druckraum oder Vakuumbereich hermetisch dicht herausleitbar sind.

Erfindungsgemäß wurde von der bisherigen Technologie abgewichen, wonach das Sensorgehäuse durch eine Kappe oder dgl. zur Messseite hin abgeschlossen worden ist. Vielmehr ist eine neue Technik realisiert worden, wonach das eigentliche Sensorelement unmittelbar an der Messseite des Sensors sitzt bzw. diese bildet, nämlich dadurch, dass das Sensorelement selbst als Abschluss für das Gehäuse dient, wonach nämlich das Sensorelement Teil des Gehäuses ist und dieses zur Messseite hin abschließt und dabei gleichzeitig abdichtet.

Entsprechend den voranstehenden Ausführungen ist es in erfindungsgemäßer Weise erforderlich, dass das Sensorelement - als bauliche Einheit - zum Abschluss des Gehäuses geeignet ist. Mit anderen Worten bildet das Sensorelement den Abschluss des Gehäuses und hat somit neben der eigentlichen Mess- bzw. Detektionsfunktion die Funktion einer Abdichtung bzw. Kapselung.

Folglich ist das Sensorelement Teil des Gehäuses und bildet durch eine dichte Verbindung mit dem Gehäuse eine Einheit.

Im Konkreten ist es denkbar, dass das Gehäuse - wie bislang üblich und von Vorteil - aus Metall besteht. Das Sensorelement könnte zumindest an dessen Oberfläche aus Keramik bestehen. Die Funktionselemente des Sensorelements könnten dabei in ein entsprechend definiertes Keramiksubstrat eingebunden sein.

Zur Vermeidung thermischer Spannungen und einer daraus resultierenden Rissbildung, insbesondere an den Verbindungsstellen, ist es von weiterem Vorteil, wenn die thermischen Ausdehnungskoeffizienten des Gehäuses und des Sensorelements in etwa aufeinander abgestimmt sind. So lassen sich ohne weiteres Metalle für das Gehäuse und Keramiken für das Sensorelement finden, deren Ausdehnungskoeffizienten in etwa einander entsprechen.

Im Konkreten ist es denkbar, dass das Sensorelement messseitig, vorzugsweise bündig, auf das Gehäuse aufgesetzt und dabei mit dem Gehäuse verklebt, verlötet oder verschweißt ist. Bei einer bündigen Ausführung des Sensorelements würde dies bedeuten, dass dieses das Gehäuse zur Messseite hin zumindest geringfügig verlängert, jedenfalls dort das Gehäuse und somit den Innenraum des Gehäuses hermetisch abdichtet.

Ebenso ist es denkbar, dass das Sensorelement passgenau bzw. formschlüssig in das Gehäuse eingesetzt ist und dabei einen messseitigen Abschluss des Gehäuses definiert. Im Rahmen einer solchen Ausführungsform würde die Gehäusewandung das Sensorelement insgesamt in sich aufnehmen, wobei das Sensorelement den stirnseitigen Abschluss des Gehäuses bildet, ohne dass das Sensorelement weiterreichend abgeschirmt ist.

Wie bereits zuvor erwähnt, kann das Sensorelement auf beliebige Art und Weise mit dem Gehäuse verbunden sein, wobei eine abdichtende Verbindung von Vorteil ist. Das Sensorelement könnte mit dem Gehäuse verklebt, verlötet oder verschweißt sein. Ebenso ist es denkbar, dass das Sensorelement bei erwärmtem Sensorgehäuse in dieses eingesetzt wird und das Sensorgehäuse beim Abkühlen regelrecht auf das Sensorelement aufschrumpft, so dass eine kraftschlüssige Verbindung, durchaus unter Zwischenschaltung von Klebematerial, geschaffen ist.

Das Sensorelement kann aus Keramik bzw. einem Keramiksubstrat gefertigt sein, wobei sich die Funktionalität des Sensorelements durch eine mehrschichtige Keramik definieren lässt. In ganz besonders vorteilhafter Weise ist das Sensorelement in LTCC-Technologie (Low-Temperature Cofired Ceramics) gefertigt.

### Dazu folgendes:

Mit der LTCC-Technologie werden sogenannte Niedertemperatur-Einbrand-Keramiken gefertigt. Dabei handelt es sich um eine Technologie, mit der bislang Mehrlagenschaltungen auf der Basis von gesinterten Keramikträgern hergestellt wurden. Es können Leiterbahnen, Kondensatoren, Widerstände und Spulen erzeugt werden. Die Elemente lassen sich durch Siebdruck oder durch phototechnische Prozesse auf die Schichten aufbringen. Die ungebrannten Keramikfolien werden einzeln strukturiert, nämlich mit den Funktionselementen der jeweiligen Sensoren, werden danach gestapelt und laminiert. Abschließend wird ein definiertes Sinterprofil mit einer auf das jeweilige Keramikmaterial abgestimmten Sintertemperatur, regelmäßig im Bereich zwischen ca. 850 bis 900°C, angewandt.

Jedenfalls ist es von ganz besonderem Vorteil, das Sensorelement in LTCC-Technologie als mehrschichtiges Keramik-Substrat zu fertigen, welches die elektrischen/elektronischen Bausteine des jeweiligen Sensors nebst der Kontaktierung bzw. der Anschlüsse beinhaltet. So ist das Sensorelement in LTCC-Technologie als monolithisches Element zu verstehen, welches ganz überwiegend aus Keramik besteht. Ein entsprechend gefertigtes bzw. gesintertes Sensorelement lässt sich in idealer Weise zum Abschluss des Metallgehäuses verwenden, umfasst nämlich eine hinreichend gute Druckbeständigkeit, ohne dass das eigentliche Sensorelement durch eine separate Schutzkappe nach außen abgeschirmt ist. Ganz im Gegenteil liegt das Sensorelement messseitig frei, so dass insoweit die aus dem Stand der Technik bekannt, nämlich die in der Praxis auftretenden Probleme weitestgehend eliminiert sind.

Die erfindungsgemäßen Vorteile lassen sich kurzerhand wie folgt zusammenfassen:
- Das Sensorelement sitzt ohne Vorkehrung trennender Gehäuseteile, Luftspalte, Vergussspalte etc. sehr weit vorne und damit nahe am Messobjekt. Daraus resultiert eine höhere Empfindlichkeit;
- durch die höhere Empfindlichkeit des Sensorelements steigt die Auflösung und Stabilität des Sensors, da die Verstärkung des Signals geringer gewählt werden kann:
- durch den geringen Abstand ist der erforderliche Messfleck kleiner, weshalb auch kleinere Messobjekte mit gleichbleibender Linearität messbar bzw. detektierbar sind;
- das Sensorelement ist Teil des Gehäuses, woraus sich Einsparung beim Gehäuse in Bezug die sonst übliche Abdeckung ergeben;
- durch die Möglichkeit einer Lötverbindung ist das Sensorelement dicht mit dem Gehäuse verbunden. Das Eindringen von Fremdkörpern in das Sensorinnere ist dadurch wirksam vermieden;
- der Sensor ist hermetisch dicht und für Druck- oder Vakuumanwendungen ohne zusätzliche Abdichtmaßnahmen geeignet;
- das Ausgasen oder Freisetzen flüchtiger Substanzen aus dem Sensorinneren in eine Vakuum- oder Ultra-Clean-Umgebung ist wirksam vermieden;
- eine integrierte Elektronik auf der Rückseite des Sensorelements ermöglicht kürzeste Leitungslängen und geringe parasitäre Kapazitäten, was die Stabilität (Langzeitstabilität, EMV-Stabilität, Temperaturstabilität) und Empfindlichkeit des Sensors steigert;
- die Nutzung eines Keramik-Substrats bietet eine hohe mechanische Robustheit und Stabilität des Sensorelements. Insbesondere die Temperaturstabilität ist aufgrund des geringen Ausdehnungskoeffizienten der Keramik hoch, wodurch sich temperatur- und langzeitstabile Sensoren realisieren lassen;
- die Wasseraufnahme der Keramik ist vernachlässigbar, so dass keine Beeinflussung durch veränderte parasitäre Kapazitäten entsteht;
- eine direkte Temperaturmessung auf der Keramik in unmittelbarer Nähe zur Messspule oder Messkapazität ist möglich, wodurch Temperaturgradienten keinen Einfluss haben. Die Temperatrukompensation findet direkt am Ort der Messung, nämlich unmittelbar an der Messseite des Sensors statt.

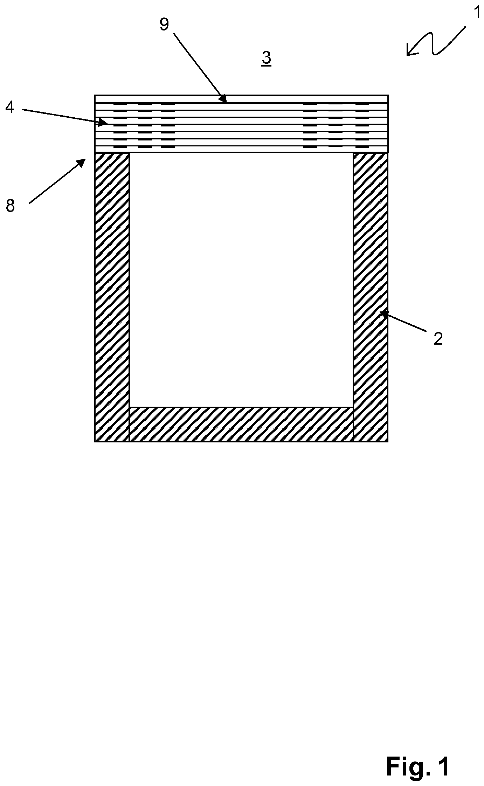

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht, geschnitten, den grundsätzlichen Aufbau eines nicht erfindungsgemäßen Sensors, wobei das Sensorelement in LTCC-Technik aus einem Keramik-Substrat besteht und nach dem Wirbelstromprinzip arbeitet,

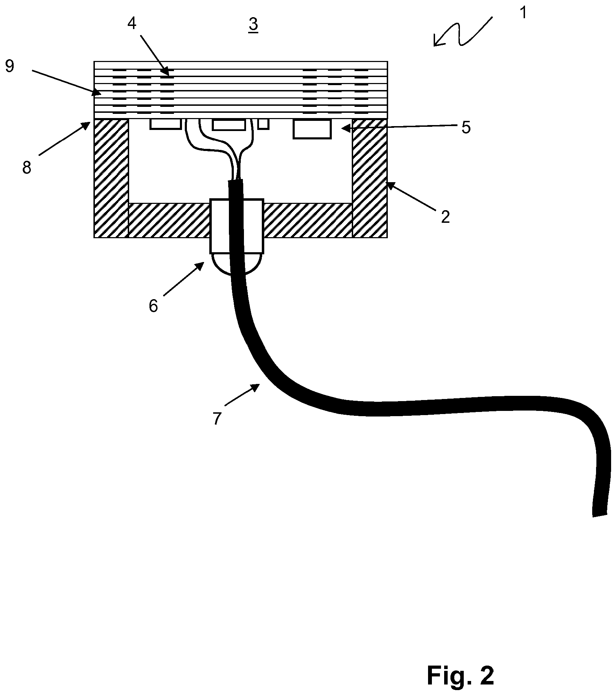

- Fig. 2: in einer schematischen Seitenansicht, geschnitten, ein weiteres Ausführungsbeispiel eines nicht erfindungsgemäßen Sensors, wobei das Sensorelement in LTCC-Technik aus einem Keramik-Substrat besteht und nach dem Wirbelstromprinzip arbeitet und wobei rückseitig am Sensorelement elektronische Bauteile angeordnet sind,

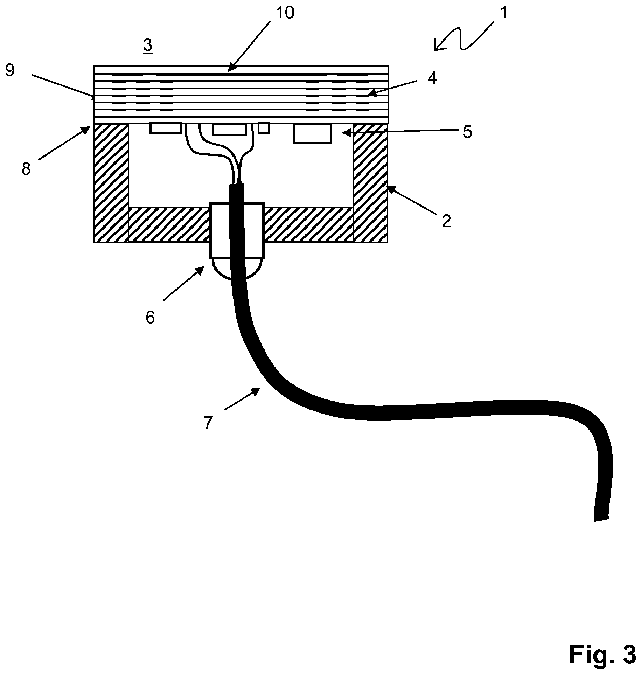

- Fig. 3: in einer schematischen Seitenansicht, geschnitten, ein weiteres Ausführungsbeispiel eines nicht erfindungsgemäßen Sensors, wobei das Sensorelement in LTCC-Technik aus einem Keramik-Substrat besteht und sowohl nach dem Wirbelstromprinzip als auch kapazitiv arbeitet und wobei rückseitig am Sensorelement elektronische Bauteile angeordnet sind,

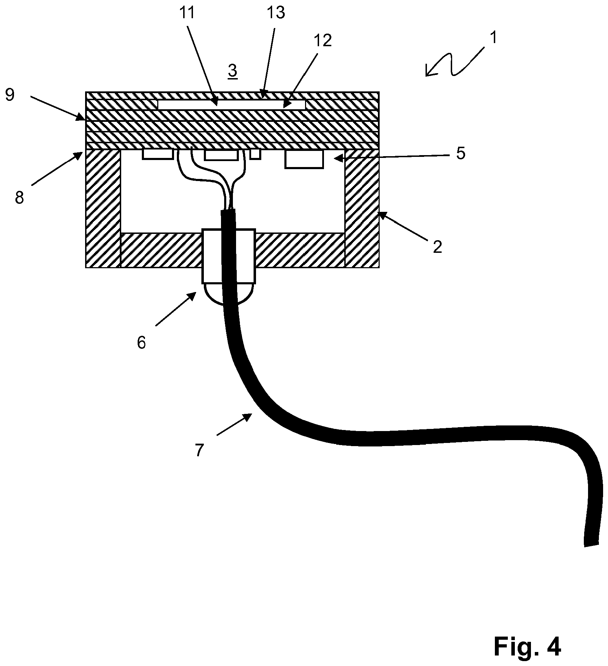

- Fig. 4: in einer schematischen Seitenansicht, geschnitten, ein weiteres Ausführungsbeispiel eines nicht erfindungsgemäßen Sensors, wobei das Sensorelement in LTCC-Technik aus einem Keramik-Substrat besteht und als Drucksensor ausgeführt ist und wobei rückseitig am Sensorelement elektronische Bauteile angeordnet sind, und

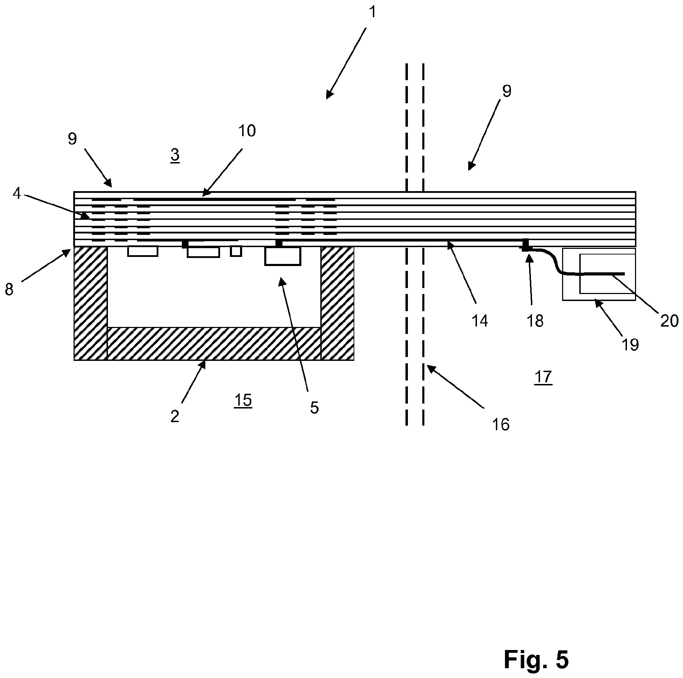

- Fig. 5: in einer schematischen Seitenansicht, geschnitten, ein weiteres Ausführungsbeispiel eines erfindungsgemäßen Sensors unter Nutzung der mehrschichtigen LTCC-Technologie mit integraler Durchkontaktierung.

Fig. 1 zeigt in einer sehr schematischen Ansicht, geschnitten, ein Ausführungsbeispiel eines nicht erfindungsgemäßen Sensors, wobei es sich dabei ebenso um einen induktiven oder kapazitiven Sensor handeln könnte. Das Sensorelement 1 ist erkennbar Teil des Gehäuses 2 und schließt das Gehäuse 2 zur Messseite 3 hin hermetisch ab.

Im Konkreten handelt es sich bei dem Sensorelement 1 um eine Multilayer-Keramik 9, die in LTCC-Technologie (Low-Temperature Cofired Ceramics) hergestellt worden ist. Das eigentliche Sensorelement 1 ist dabei eine in die Multilayer-Keramik 9 integrierte Spule 4, die in mehreren Lagen des Keramik-Substrats 9 eingebettet ist.

Bei einem kapazitiven Sensor wäre dies eine leitfähige flächige Elektrode, die Teil des Kondensators ist, der zwischen Elektrode und Messobjekt entsteht. Das Sensorelement ist dabei ebenfalls ein Keramiksubstrat, das aus mehreren Lagen besteht, wobei die Lagen in einem Sinterprozess fest miteinander verbunden werden, nämlich durch Diffusion. Beim Sintern entsteht eine kompakte, stabile und leicht handhabbare Einheit.

Das in Fig. 1 gezeigte Sensorelement 1 ist mit dem Gehäuse 2, welches aus Metall besteht, verlötet, wodurch eine kompakte, fest verbundene Einheit gebildet ist. Das Gehäuse 2 ist durch das Sensorelement 1 hermetisch geschlossen. Die Lötverbindung 8 ist angedeutet.

Des Weiteren sei an dieser Stelle angemerkt, dass bei der Darstellung in Fig. 1 auf die elektrischen Anschlüsse verzichtet worden ist, zumal Fig. 1 lediglich den grundsätzlichen Aufbau in Bezug auf Gehäuse 2 und das abschließende Sensorelement 1 zeigt.

Fig. 2 zeigt eine Weiterbildung des nicht erfindungsgemäßen Sensors, wobei dort das Sensorelement 1 auf der Rückseite, d.h. auf der Innenseite im Gehäuse 2, mit elektronischen Bauteilen 5 gestattet ist. Auch bei dem in Fig. 2 gezeigten Sensorelement 1 handelt es sich um ein nach dem Wirbelstromprinzip arbeitendes Sensorelement 1.

Die Bestückung mit elektronischen Bauteilen 5 kann nach der an sich bekannten Hybridtechnologie erfolgen.

Fig. 2 zeigt des Weiteren die Vorkehrung einer abdichtenden Kabeldurchführung 6, durch die sich das Anschlusskabel 7 hindurch bis zu dem Sensorelement 1 erstreckt, an das die Leitungen des Anschlusskabels 7 angekoppelt bzw. elektrisch verbunden sind.

Des Weiteren ist in Fig. 2 die abdichtende Lötverbindung 8 zwischen dem Gehäuse 2 und dem Sensorelement angedeutet. Aufgrund der Lötverbindung ist eine sichere Abdichtung geschaffen. Obendrein ist das Sensorelement 1, welches aus einem Keramik-Substrat gefertigt ist, hinreichend beständig.

Fig. 3 zeigt ein Ausführungsbeispiel eines nicht erfindungsgemäßen Sensors, wobei dort auf dem Keramik-Substrat 9 zwei unterschiedlich arbeitende Sensorelemente 1 angeordnet bzw. integriert sind. Neben der Spule 4 für den Wirbelstromsensor ist gleichzeitig eine Elektrode 10 für einen kapazitiven Sensor integriert. Dadurch ist ein Kombisensor gebildet, wobei ebenso ein zusätzlicher Temperatursensor vorgesehen sein kann. Beispielsweise könnte der ohmsche Widerstand des Spulendrahtes in bekannter Weise zur Temperaturmessung und damit zur Temperaturkompensation eines induktiv arbeitenden Sensorelements verwendet werden. Von besonderem Vorteil ist es, wenn Messspule und Kompensationsspule voneinander getrennt in das Keramiksubstrat 9 eingebracht werden. Dabei lassen sich die jeweiligen Eigenschaften der Spule optimal an die Aufgabe (Abstandsmessung und Temperaturkompensation) anpassen.

Fig. 4 zeigt einen Sensor, bei dem das Sensorelement 1 als Drucksensor ausgeführt ist, und zwar ebenfalls nach der LTCC-Technologie. Auch hier umfasst das Keramik-Substrat 9 mehrere Lagen, die gemeinsam das Gehäuse 2 - als Metallgehäuse ausgeführt - per Lötverbindung 8 abdecken und abdichten.

Auch hier sind auf der Rückseite des Elements 1 bzw. des Keramik-Substrats 9 elektronische Bauteile 5 vorgesehen.

Auch in der Darstellung nach Fig. 4 erstreckt sich ein Anschlusskabel 7 durch eine Kabeldurchführung 6 hindurch in das Innere des Gehäuses 2 und ist dort auf der Rückseite des Sensorelements 1 angekoppelt bzw. elektrisch verbunden.

Fig. 4 lässt des Weiteren erkennen, dass ein drucksensitives Element 11 direkt als Hohlraum 12 in dem Keramik-Substrat 9 gekapselt ist. Die Vorderseite des Keramiksubstrats 9 bildet die druckempfindliche Membran 13, die bei Druckbeaufschlagung ausgelenkt wird. Zur Messung der Abstandsänderung der druckempfindlichen Membran 13 könnten wiederum kapazitive Elektroden oder Wirbelstromspulen innerhalb des Keramik-Substrats 9 verwendet werden.

Besonders vorteilhaft ist die Kombination des zuvor erörterten Sensorelements 1 aus LTCC-Keramik mit einem Gehäuse 2 aus Titan, Zirkonium oder einer Legierung davon. Titan oder Zirkonium und Keramik besitzen nahezu die gleichen thermischen Ausdehnungskoeffizienten, so dass bei einer Verbindung zwischen den Materialien keine störenden Spannungen an der Verbindungsstelle im Temperaturverlauf entstehen. Beim Weichlöten ist eine Vorbehandlung des Keramiksubstrats beispielsweise durch Metallisieren und ggf. Vergolden des Metall-Gehäuses an der Lötstelle erforderlich. Titan lässt sich aufgrund seiner Materialeigenschaften, insbesondere aufgrund der spezifischen Oberflächenenergie/Oberflächenspannung, besonders gut mit Keramik verlöten. Beim sogenannten Aktivlöten können Titan und Keramik unmittelbar miteinander verbunden werden, ohne dass vor der Lötverbindung Zwischenschichten als Haftungsvermittler aufgebracht werden.

Es ist auch denkbar, das Metallgehäuse mehrteilig auszuführen, beispielweise mit einem Metallrahmen und einem Gehäusedeckel. In einem mehrstufigen Prozess kann der Metallrahmen beispielsweise aus Titan oder Zirkonium auf das Sensorelement mittels Hartlöten gelötet werden. Da Hartlöten bei relativ hohen Temperaturen von ca. 850°C erfolgt, lassen sich nachfolgende Lötprozesse mittels Weichlot durchführen, ohne dass die Hartlötverbindung aufgelöst wird. Somit können nach dem Auflöten des Metallrahmens auf das Sensorelement Elektronickomponenten gelötet werden. Nach dem Aufbringen der Elektronik kann der Gehäusedeckel mit dem Metallrahmen verbunden werden. Dies kann beispielsweise ebenfalls durch Löten, Schweißen oder Kleben erfolgen.

Besonders vorteilhaft ist die Verwendung der mehrschichtigen LTCC-Technologie, weil damit auch Leiterbahnen und somit Durchkontaktierungen erzeugbar sind. Die Kontaktierung von Elektroniken im Druckraum oder im Vakuumbereich ist häufig ein Problem, wenn Kabel, Litzen oder Leitungen verwendet werden müssen. Das Herausführen von Leitungen aus diesen Bereichen ist problematisch, weil aufwändige und teure Vakuumdurchführungen erforderlich sind. Diese sind häufig mit Glas isoliert und sowohl in der Herstellung als auch in der Anwendung aufwändig und teuer.

Gemäß der Darstellung in Fig. 5 können bei den erfindungsgemäßen Sensorelementen 1 die Leiterbahnen 4, 14 innerhalb der Keramik 9 unter dem Metallgehäuse 2 aus dem Druckraum oder Vakuumbereich 15 herausgeführt werden. Durch die gesinterte Verbindung innerhalb der Keramik 9 sind die Leiterbahnen 4, 14 hermetisch dicht, so dass die Abdichtung des Gehäuses 2 nicht beeinträchtigt wird. Es sind keine zusätzlichen Vakuum- oder Druckdurchführungen für die Anschlussleitungen erforderlich, so dass eine einfache, kostengünstige und darüber hinaus auch sehr kompakte Durchführung realisierbar ist. Damit lassen sich hermetisch dichte und mechanisch stabile Anschlüsse für die Elektronik auf einfache Weise herstellen.

Auf der dem Druck bzw. Vakuum abgewandten Seite 17 wird die Leiterbahn 14 mittels einer Durchkontaktierung 18 aus dem Keramiksubstrat 9 herausgeführt. An der Stelle der Durchkontaktierung 18 kann ein Lötpad angebracht werden, auf den dann mittels herkömmlicher Löttechnik ein Stecker 19 oder ein Anschlusskabel 20 gelötet wird. Da sich diese Seite der Keramik 9 außerhalb des Druckraums 15 bzw. des Vakuums befindet, kann hier ein günstiger, einfacher Stecker 19 verwendet werden, der hohen Drücken oder einem Vakuum nicht standhalten muss.

Hinsichtlich weiterer vorteilhafter Ausgestaltungen des erfindungsgemäßen Sensors wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Sensors lediglich zur Erörterung der beanspruchten Lehre dienen, diese jedoch nicht auf die Ausführungsbeispiele einschränken.

### Bezugszeichenliste

- 1: Sensorelement
- 2: Gehäuse, Metallgehäuse
- 3: Messseite des Sensors
- 4: Spule/Leiterbahn
- 5: elektrisches Bauteil
- 6: Kabeldurchführung
- 7: Anschlusskabel
- 8: Lötverbindung
- 9: Keramik, Keramik-Substrat, Multilayer-Keramik
- 10: Elektrode
- 11: drucksensitives Element
- 12: Hohlraum
- 13: druckempfindliche Membran
- 14: Leiterbahn (als Durchführung)
- 15: Druckraum, Vakuumbereich
- 16: Abgrenzung gegenüber Hochdruck, Vakuum
- 17: dem Druck/Vakuum abgewandte Seite
- 18: Durchkontaktierung, Lötpad
- 19: Stecker
- 20: Anschlusskabel (im Stecker oder anstelle des Steckers)

## Patentansprüche

1. Sensor mit einem kontaktlos arbeitenden Sensorelement (1) und einem elektronische Bauteile (5) sowie einen elektrischen/elektronischen Anschluss umfassenden Gehäuse (2),
wobei das Sensorelement (1) Teil des Gehäuses (2) ist und dieses zur Messseite (3) hin abschließt und abdichtet, wobei das Gehäuse (2) in einem Druckraum oder Vakuumbereich (15) anordenbar ist und wobei das Sensorelement (1) in einem Keramik-Substrat (9) eingebettete Leiterbahnen (4, 14) umfasst, die innerhalb des Keramik-Substrats (9) aus dem Druckraum oder Vakuumbereich (15) hermetisch dicht herausgeführt sind.

2. Sensor nach Anspruch 1, **dadurch gekennzeichnet, dass** die Leiterbahnen (4, 14) innerhalb des Keramik-Substrats (9) durch eine gesinterte Verbindung hermetisch dicht angeordnet sind.

3. Sensor nach Anspruch 1 oder 2, **dadurch gekennzeichnet, dass** auf der dem Druck bzw. Vakuum abgewandten Seite (17) die Leiterbahn (14) mittels einer Durchkontaktierung (18) aus dem Keramik-Substrat (9) herausgeführt sind.

4. Sensor nach Anspruch 1 oder 2, **dadurch gekennzeichnet, dass** auf der dem Druck bzw. Vakuum abgewandten Seite (17) die Leiterbahn (14) einen vorzugsweise löttechnisch angebrachten Stecker (19) oder ein Anschlusskabel (20) zur Kontaktierung aufweist.

5. Sensor nach einem der Ansprüche 1 bis 4, **dadurch gekennzeichnet, dass** das Gehäuse (2) aus Metall und das Sensorelement (1) - zumindest an dessen Oberfläche - aus Keramik besteht.

6. Sensor nach einem der Ansprüche 1 bis 5, **dadurch gekennzeichnet, dass** das Gehäuse (2) aus Titan oder Zirkonium oder einer entsprechenden Legierung besteht.

7. Sensor nach einem der Ansprüche 1 bis 6, **dadurch gekennzeichnet, dass** die thermischen Ausdehnungskoeffizienten des Gehäuses (2) und des Sensorelements (1) in etwa aufeinander abgestimmt sind.

8. Sensor nach einem der Ansprüche 1 bis 7, **dadurch gekennzeichnet, dass** das Sensorelement (1) messseitig auf das Gehäuse (2) vorzugsweise bündig aufgesetzt oder passgenau bzw. formschlüssig in das Gehäuse (2) eingesetzt ist.

9. Sensor nach einem der Ansprüche 1 bis 8, **dadurch gekennzeichnet, dass** das Sensorelement (1) mit dem Gehäuse (2) verklebt, verlötet oder verschweißt ist.

10. Sensor nach einem der Ansprüche 1 bis 9, **dadurch gekennzeichnet**, das das Sensorelement (1) aus mehrschichtiger Keramik besteht.

11. Sensor nach Anspruch 10, **dadurch gekennzeichnet, dass** das Sensorelement (1) in LTCC-Technologie (Low Temperature Cofired Ceramics) aufgebaut ist.

12. Sensor nach einem der Ansprüche 1 bis 11, **dadurch gekennzeichnet, dass** das Sensorelement (1) auf der Rückseite, d.h. auf der der Messseite (3) abgewandten Seite, mit elektronischen Bauteilen (5), vorzugsweise in Hybridtechnologie, bestückt ist.

13. Sensor nach einem der Ansprüche 10 bis 12, **dadurch gekennzeichnet, dass** in einem Keramik-Substrat (9) zwei oder mehrere Sensorelemente (1) integriert bzw. miteinander kombiniert sind.

14. Sensor nach Anspruch 13, **dadurch gekennzeichnet, dass** die Sensorelemente (1) funktional miteinander verknüpft sind.

## Claims

1. Sensor having a sensor element (1) which operates in a contactless manner and a housing (2) which comprises electronic components (5) and an electrical/electronic connection,
wherein the sensor element (1) is part of the housing (2) and terminates and seals it with respect to the measurement side (3), wherein the housing (2) can be arranged in a pressure chamber or reduced-pressure region (15), and wherein the sensor element (1) comprises strip conductors (4, 14) which are embedded in a ceramic substrate (9) and which are guided within the ceramic substrate (9) out of the pressure chamber or reduced-pressure region (15) in a hermetically sealed manner.

2. Sensor according to claim 1, **characterised in that** the strip conductors (4, 14) are arranged inside the ceramic substrate (9) in a hermetically sealed manner by means of a sintered connection.

3. Sensor according to claim 1 or 2, **characterised in that** at the side (17) facing away from the pressure or reduced pressure the strip conductors (14) are guided out of the ceramic substrate (9) by means of a through-contacting (18).

4. Sensor according to claim 1 or 2, **characterised in that** at the side (17) facing away from the pressure or reduced pressure the strip conductor (14) has a connector (19) which is preferably fitted using soldering technology or a connection cable (20) for contacting.

5. Sensor according to any one of claims 1 to 4,
**characterised in that** the housing (2) comprises metal and the sensor element (1) - at least at the surface thereof - comprises ceramic material.

6. Sensor according to any one of claims 1 to 5,
**characterised in that** the housing (2) comprises titanium or zirconium or a corresponding alloy.

7. Sensor according to any one of claims 1 to 6,
**characterised in that** the thermal expansion coefficients of the housing (2) and the sensor element (1) are substantially coordinated with each other.

8. Sensor according to any one of claims 1 to 7,
**characterised in that** the sensor element (1) is placed preferably in a flush manner at the measurement side on the housing (2) or is inserted into the housing (2) in a precisely fitting or positive-locking manner.

9. Sensor according to any one of claims 1 to 8,
**characterised in that** the sensor element (1) is adhesively bonded, soldered or welded to the housing (2).

10. Sensor according to any one of claims 1 to 9,
**characterised in that** the sensor element (1) comprises multilayered ceramic material.

11. Sensor according to claim 10, **characterised in that** the sensor element (1) is constructed using LTCC technology (Low Temperature Cofired Ceramics).

12. Sensor according to any one of claims 1 to 11,
**characterised in that** the sensor element (1) is provided at the rear side, that is to say, at the side facing away from the measurement side (3), with electronic components (5), preferably with hybrid technology.

13. Sensor according to any one of claims 10 to 12,
**characterised in that** two or more sensor elements (1) are integrated or combined with each other in a ceramic substrate (9) .

14. Sensor according to claim 13, **characterised in that** the sensor elements (1) are functionally linked to each other.

## Revendications

1. Capteur avec un élément de capteur sans contact (1) et un boîtier (2) comprenant des composants électroniques (5) ainsi qu'une borne électrique/électronique,
dans lequel l'élément de capteur (1) fait partie du boîtier (2) et ferme et étanchéifie celui-ci par rapport au côté de mesure (3), dans lequel le boîtier (2) peut être disposé dans un espace sous pression ou une zone sous vide (15) et dans lequel l'élément de capteur (1) comprend des pistes conductrices (4, 14) incorporées dans un substrat en céramique (9), qui sont guidées de manière hermétiquement étanche à l'intérieur du substrat en céramique (9) hors de l'espace sous pression ou de la zone sous vide (15).

2. Capteur selon la revendication 1, **caractérisé en ce que** les pistes conductrices (4, 14) sont disposées de manière hermétiquement étanche à l'intérieur du substrat en céramique (9) à l'aide d'une liaison frittée.

3. Capteur selon la revendication 1 ou 2, **caractérisé en ce que**, sur le côté (17) opposé à la pression ou au vide, la piste conductrice (14) est guidée hors du substrat en céramique (9) au moyen d'un contact traversant (18).

4. Capteur selon la revendication 1 ou 2, **caractérisé en ce que**, sur le côté (17) opposé à la pression ou au vide, la piste conductrice (14) comprend un connecteur (19) ou un câble de raccordement (20) monté par brasage pour la mise en contact.

5. Capteur selon l'une des revendications 1 à 4, **caractérisé en ce que** le boîtier (2) est constitué de métal et l'élément de capteur (1) est constitué de céramique, au moins sur sa surface.

6. Capteur selon l'une des revendications 1 à 5, **caractérisé en ce que** le boîtier (2) est constitué de titane ou de zirconium ou d'un alliage correspondant.

7. Capteur selon l'une des revendications 1 à 6, **caractérisé en ce que** les coefficients de dilatation thermique du boîtier (2) et de l'élément de capteur (1) sont approximativement harmonisés entre eux.

8. Capteur selon l'une des revendications 1 à 7, **caractérisé en ce que** l'élément de capteur (1) est posé, côté mesure, sur le boîtier (2), de préférence en affleurement, ou est inséré de manière ajustée ou par complémentarité de forme dans le boîtier (2).

9. Capteur selon l'une des revendications 1 à 8, **caractérisé en ce que** l'élément de capteur (1) est collé, brasé ou soudé avec le boîtier (2).

10. Capteur selon l'une des revendications 1 à 9, **caractérisé en ce que** l'élément de capteur (1) est constitué d'une céramique multi-couches.

11. Capteur selon la revendication 10, **caractérisé en ce que** l'élément de capteur (1) est réalisé à l'aide de la technologie LTCC (Low Temperature Cofired Ceramics).

12. Capteur selon l'une des revendications 1 à 11, **caractérisé en ce que** l'élément de capteur (1) est muni, à l'arrière, c'est-à-dire sur le côté opposé au côté de mesure (3), de composants électroniques (5), de préférence à technologie hybride.

13. Capteur selon l'une des revendications 10 à 12, **caractérisé en ce que**, dans un substrat en céramique (9), sont intégrés ou combinés entre eux deux éléments de capteur (1) ou plus.

14. Capteur selon la revendication 13, **caractérisé en ce que** les éléments de capteur (1) sont connectés entre eux de manière fonctionnelle.
